# EUROPÄISCHE PATENTSCHRIFT

(11) **EP 3 876 370 B1**
(45) Veröffentlichungstag und Bekanntmachung des Hinweises auf die Patenterteilung: **27.11.2024**
(21) Anmeldenummer: 20161642.2
(22) Anmeldetag: 06.03.2020
(51) Int. Cl.: H02G 1/14, H01R 43/28, H01R 43/20

(54) **AUFNAHMEVORRICHTUNG FÜR VORKONFEKTIONIERTE ELEKTRISCHE LEITER**
HOLDER FOR ASSEMBLED ELECTRIC CONDUCTORS
DISPOSITIF DE LOGEMENT POUR ÉCHELLES ÉLECTRIQUES PRÉFABRIQUÉES

(43) Veröffentlichungstag der Anmeldung: 08.09.2021
(73) Patentinhaber: Ripploh, Andreas, 48432 Rheine (DE)
(72) Erfinder: Ripploh, Andreas, 48432 Rheine (DE)
(74) Vertreter: Pelster Behrends Patentanwälte PartG mbB

(56) Entgegenhaltungen:
- WO-A1-2018/165688
- DE-C1- 19 756 978
- US-A- 5 414 925
- US-A- 5 709 025

## Beschreibung

Die Erfindung betrifft eine Aufnahmevorrichtung für vorkonfektionierte elektrische Leiter, mit einem Aufnahmeteil, welches einen Führungsspalt aufweist, in welchen eine Mehrzahl von vorkonfektionierten elektrischen Leitern hintereinander einhängbar ist, wobei der Führungsspalt einen Entnahmeabschnitt aufweist durch welchen in den Führungsspalt eingehangene elektrische Leiter zur Entnahme aus dem Führungsspalt hindurchzubewegen sind, und einem Sperrmechanismus mit zumindest einem beweglichen Sperrkörper, welcher dazu eingerichtet ist, zumindest einen Teil des Entnahmeabschnitts in einer Sperrposition zu versperren und in einer Freigabeposition freizugeben, wobei der Sperrkörper ein Blockierelement ist, mittels welchem der Entnahmeabschnitt des Führungsspaltes blockierbar ist, und wobei der Sperrkörper zur Entnahme eines in den Führungsspalt eingehangenen elektrischen Leiters aus dem Führungsspalt durch eine von dem zu entnehmenden elektrischen Leiter auf den Sperrkörper aufgebrachte Öffnungskraft von der Sperrposition in die Freigabeposition bewegbar ist.

Ferner betrifft die Erfindung eine Vereinzelungseinrichtung zum Vereinzeln von vorkonfektionierten elektrischen Leitern, mit einer Aufnahmevorrichtung für vorkonfektionierte elektrische Leiter und einer Greifeinrichtung, welche dazu eingerichtet ist, elektrische Leiter aus der Aufnahmevorrichtung zu entnehmen.

Darüber hinaus betrifft die Erfindung ein Verfahren zum Vereinzeln von vorkonfektionierten elektrischen Leitern.

Bei der Verdrahtung von elektrischen Systemen, beispielsweise Schaltschränken, bestehen seit geraumer Zeit Bestrebungen, die bei der

Verdrahtung auszuführenden Bearbeitungsschritte zu automatisieren. In diesem Zusammenhang sind bereits Konfektioniermaschinen für elektrische Leiter bekannt, welche auf Grundlage von Konfektionierdaten einen Kabelsatz herstellen können, der zur Durchführung eines Verdrahtungsvorgangs benötigt wird. Entsprechende Konfektioniermaschinen sind beispielsweise dazu eingerichtet, eine Ablängung und/oder Bedruckung von elektrischen Leitern vorzunehmen. Ferner kann im Rahmen der Vorkonfektionierung ein Kontaktierelement, wie beispielsweise eine Aderendhülse, durch die Konfektioniermaschine an dem elektrischen Leiter befestigt werden.

Außerdem sind erste Ansätze bekannt, vorkonfektionierte elektrische Leiter auf Grundlage von Verlegungsdaten mittels eines Verdrahtungsroboters zu verlegen und anzuschließen. Hinsichtlich der Automatisierung des Verdrahtungsvorgangs bestehen jedoch weiterhin erhebliche Probleme bei der Übergabe von vorkonfektionierten elektrischen Leitern an den Verdrahtungsroboter. Zu Problemen führt hier insbesondere der Umstand, dass die vorkonfektionierten elektrischen Leiter dem Verdrahtungsroboter üblicherweise einzeln bereitgestellt werden müssen, sodass ein Vereinzelungsvorgang vor der Übergabe erforderlich ist.

Aus der Druckschrift WO 2018/165688 A1 ist beispielsweise eine schienenartige Ordnungsvorrichtung zur Aufnahme und Ordnung von Drahtabschnitten bekannt, mittels welcher elektrische Leiter eines Kabelsatzes gesammelt transportiert werden können. Die US 5 414 925 A betrifft einen Mechanismus zum Einsetzen von Kabelanschlüssen in Verbindungsgehäuse, wobei die verwendeten Klemmglieder als Aufnahmevorrichtung für vorkonfektionierte elektrische Leiter dienen könnten. Diese und andere Lösungen erlauben jedoch keine automatisierte Vereinzelung der vorkonfektionierten elektrischen Leiter eines Kabelsatzes.

Die der Erfindung zugrundeliegende Aufgabe besteht somit darin, eine Vereinzelung von vorkonfektionierten elektrischen Leitern zu ermöglichen, welche in einem automatisierten Verdrahtungsprozess einsetzbar ist.

Die Aufgabe wird gelöst durch eine Aufnahmevorrichtung der eingangs genannten Art, wobei die erfindungsgemäße Aufnahmevorrichtung zumindest eine Rückstellfeder aufweist, welche dazu eingerichtet ist, den Sperrkörper mit einer Schließkraft zu beaufschlagen, und der von dem zu entnehmenden elektrischen Leiter auf den Sperrkörper aufgebrachten Öffnungskraft entgegenzuwirken, und eine Bewegung des Sperrkörpers von der Freigabeposition in die Sperrposition zu veranlassen.

Die Erfindung macht sich die Erkenntnis zunutze, dass ein entsprechender Sperrmechanismus die Entnahme von einzelnen elektrischen Leitern aus dem Führungsspalt erlaubt und außerdem die gleichzeitige Entnahme von mehreren elektrischen Leitern verhindert, sodass eine Vereinzelung der elektrischen Leiter umsetzbar ist. Ferner wird vermieden, dass während des Entnahmevorgangs elektrische Leiter, welche nicht aus dem Führungsspalt entnommen werden sollen, aus dem Führungsspalt herausfallen. Die Öffnungskraft, welche erforderlich ist, um den zumindest einen Sperrkörper von der Sperrposition in die Freigabeposition zu bewegen, wird vorzugsweise beim Herausziehen des an dem Sperrkörper anliegenden elektrischen Leiters aus dem Führungsspalt mittels einer geeigneten Greifeinrichtung auf den Sperrkörper aufgebracht. Die Öffnungskraft ist dabei höher als eine Schließkraft, welche den zumindest einen Sperrkörper in der Sperrposition hält. Wenn sich der zumindest eine Sperrkörper in der Sperrposition befindet, können die elektrischen Leiter nicht durch den Entnahmeabschnitt hindurchbewegt werden, sodass ein Herausfallen der sich in dem Führungsspalt befindlichen elektrischen Leiter verhindert wird. Wenn sich der zumindest eine Sperrkörper in der Freigabeposition befindet, kann ein elektrischer Leiter durch den Entnahmeabschnitt hindurchbewegt und aus dem Führungsspalt entnommen werden.

Der elektrische Leiter kann beispielsweise ein Kabel sein und/oder eine Litze umfassen. Die Litze kann abschnittsweise oder vollständig isoliert sein, beispielsweise mit einer elektrisch nicht leitfähigen Isolierhülle. Der elektrische Leiter an einem Ende oder an beiden Enden ein Kontaktierelement zum elektrisch leitfähigen Kontaktieren, insbesondere Anschließen, des elektrischen Leiters aufweisen. Das Kontaktierelement kann beispielsweise eine Aderendhülse sein. Eine leiterseitige Unterkante des Kontaktierelements dient vorzugsweise zum Einhängen des elektrischen Leiters in den Führungsspalt.

In einer bevorzugten Ausführungsform der erfindungsgemäßen Aufnahmevorrichtung sind die elektrischen Leiter zur Entnahme aus dem Führungsspalt in eine Entnahmerichtung durch den Entnahmeabschnitt hindurchzubewegen, wobei der Sperrkörper durch eine in die Entnahmerichtung auf den Sperrkörper wirkende Öffnungskraft von der Sperrposition in die Freigabeposition bewegbar ist. Die Entnahmerichtung verläuft vorzugsweise fluchtend oder parallel zum Führungsspalt. Das Aufnahmeteil kann einen Einführabschnitt aufweisen, über welchen die vorkonfektionierten elektrischen Leiter in den Führungsspalt einführbar sind. Vorzugsweise befindet sich der Entnahmeabschnitt an einem ersten Ende des Aufnahmeteils und der Einführabschnitt befindet sich an einem zweiten gegenüberliegenden Ende des Aufnahmeteils. Die Einführrichtung, in welcher die vorkonfektionierten elektrischen Leiter durch den Einführabschnitt zum Einführen in den Führungsspalt hindurchzubewegen sind, verläuft vorzugsweise fluchtend oder parallel zum Führungsspalt.

Die erfindungsgemäße Aufnahmevorrichtung weist zumindest eine Rückstellfeder auf, welche dazu eingerichtet ist, den Sperrkörper mit einer Schließkraft zu beaufschlagen. Zum Öffnen des Sperrmechanismus ist folglich eine Öffnungskraft auf den zumindest einen Sperrkörper aufzubringen, welche größer ist als die von der Rückstellfeder auf den Sperrkörper aufgebrachte Schließkraft. Die Rückstellfeder erlaubt die Entnahme von einzelnen elektrischen Leitern aus dem Führungsspalt und sorgt nach der Entnahme eines einzelnen elektrischen Leiters für ein selbsttätiges Verschließen des Führungsspalts im Bereich des Entnahmeabschnitts.

Erfindungsgemäß ist die Rückstellfeder dazu eingerichtet, der von dem zu entnehmenden elektrischen Leiter auf den Sperrkörper aufgebrachten Öffnungskraft entgegenzuwirken. Zusätzlich ist die Rückstellfeder dazu eingerichtet, eine Bewegung des Sperrkörpers von der Freigabeposition in die Sperrposition zu veranlassen. Die Rückstellfeder kann eine Bewegung des Sperrkörpers von der Freigabeposition zurück in die Sperrposition vorzugsweise nur dann veranlassen, wenn der Bewegungspfad des Sperrkörpers nicht durch einen elektrischen Leiter blockiert wird. Eine durch die Rückstellfeder veranlasste Bewegung des Sperrkörpers von der Freigabeposition in die Sperrposition erfolgt, wenn auf den Sperrkörper keine Öffnungskraft aufgebracht wird.

Es ist außerdem eine erfindungsgemäße Aufnahmevorrichtung bevorzugt, bei welcher der Sperrkörper dazu eingerichtet ist, bei einer Bewegung zwischen der Sperrposition und der Freigabeposition eine Linearbewegung auszuführen. Vorzugsweise führt der Sperrkörper zwischen der Sperrposition und der Freigabeposition eine axiale Gleitbewegung, insbesondere innerhalb einer Sperrkörperführung, aus. Insbesondere ist der Sperrkörper dazu eingerichtet, bei einer Bewegung zwischen der Sperrposition und der Freigabeposition einem quer, insbesondere senkrecht, zum Führungsspalt verlaufenden Bewegungspfad zu folgen. Alternativ oder zusätzlich zu der Linearbewegung kann der Sperrkörper dazu eingerichtet sein, bei einer Bewegung zwischen der Sperrposition und der Freigabeposition eine Schwenkbewegung und/oder eine Kippbewegung auszuführen.

In einer vorteilhaften Weiterbildung der erfindungsgemäßen Aufnahmevorrichtung ist die Rückstellfeder als Schenkelfeder ausgebildet. Alternativ kann die Rückstellfeder auch eine andere Art von Biegefeder sein. Ferner kann die Rückstellfeder auch eine Torsionsfeder, beispielsweise eine Stabfeder oder eine Schraubenfeder sein. Der Sperrkörper der Aufnahmevorrichtung kann als Sperrstift ausgebildet sein. Alternativ kann der Sperrkörper auch als Sperrklappe oder Sperrriegel ausgebildet sein. Der Sperrkörper stellt erfindungsgemäß ein Blockierelement dar, mittels welchem der Entnahmeabschnitt des Führungsspaltes blockierbar ist.

In einer weiteren bevorzugten Ausführungsform der erfindungsgemäßen Aufnahmevorrichtung weist der Sperrmechanismus zwei bewegliche Sperrkörper auf. Die zwei Sperrkörper sind dazu eingerichtet, in ihrer Sperrposition den Entnahmeabschnitt gemeinsam zu versperren und in ihrer Freigabeposition den Entnahmeabschnitt gemeinsam freizugeben. Die Sperrkörper sind zur Entnahme eines in den Führungsspalt eingehangenen elektrischen Leiters aus dem Führungsspalt durch eine von dem zu entnehmenden elektrischen Leiter auf die Sperrkörper aufgebrachte Öffnungskraft von ihrer Sperrposition in ihre Freigabeposition bewegbar. Bei einer Beaufschlagung der Sperrkörper mit einer Öffnungskraft bewegen sich die Sperrkörper vorzugsweise gleichzeitig von ihrer Sperrposition in ihre Freigabeposition, sodass der elektrische Leiter aus dem Führungsspalt herausbewegt werden kann.

Es ist außerdem eine erfindungsgemäße Aufnahmevorrichtung vorteilhaft, bei welcher jedem Sperrkörper jeweils eine Rückstellfeder zugeordnet ist, welche dazu eingerichtet ist, den jeweiligen Sperrkörper mit einer Schließkraft zu beaufschlagen. Die beiden Sperrkörper berühren sich in der Sperrposition vorzugsweise gegenseitig. Beim Freigeben des Entnahmeabschnitts führen die Sperrkörper vorzugsweise eine Bewegung nach außen aus. Vorzugsweise werden die Sperrkörper von dem zu entnehmenden elektrischen Leiter nach außen auseinandergedrückt. Zum Versperren des Entnahmeabschnitts nach der Entnahme eines elektrischen Leiters führen die Sperrkörper vorzugsweise eine Bewegung nach innen aufeinander zu aus.

In einer weiteren bevorzugten Ausführungsform der erfindungsgemäßen Aufnahmevorrichtung sind die Sperrkörper dazu eingerichtet, bei einer Bewegung zwischen ihrer Sperrposition und ihrer Freigabeposition entgegengesetzte Bewegungen auszuführen. Bei einer Öffnungsbewegung bewegen sich die Sperrkörper vorzugsweise nach außen. Bei einer Schließbewegung bewegen sich die Sperrkörper vorzugsweise nach innen.

Es ist darüber hinaus eine erfindungsgemäße Aufnahmevorrichtung vorteilhaft, bei welcher die Sperrkörper jeweils sich verjüngende, insbesondere sich konisch verjüngende, Endabschnitte aufweisen, wobei sich die Endabschnitte gegenseitig berühren, wenn sich die Sperrkörper in ihrer jeweiligen Sperrposition befinden. Die Sperrkörper weisen in dem Endabschnitt vorzugsweise eine abgerundete Spitze auf. Die zulaufende Form im Bereich der Endabschnitte erlaubt ein auseinanderdrücken der Sperrkörper durch den elektrischen Leiter, währenddessen dieser durch den Entnahmeabschnitt hindurchbewegt wird.

In einer weiteren bevorzugten Ausführungsform der erfindungsgemäßen Aufnahmevorrichtung ist das Aufnahmeteil als längliche Aufnahmeschiene ausgebildet. Das Aufnahmeteil kann zwei längliche Schienenteile umfassen, welche über eine Verbindungsplatte miteinander verbunden sind. Das Aufnahmeteil kann teilweise oder vollständig aus einem Metall, beispielsweise Aluminium, ausgebildet sein. Ferner kann das Aufnahmeteil teilweise oder vollständig aus Kunststoff ausgebildet sein.

Die der Erfindung zugrundeliegende Aufgabe wird ferner durch eine Vereinzelungseinrichtung zum Vereinzeln von vorkonfektionierten elektrischen Leitern der eingangs genannten Art gelöst, wobei die Aufnahmevorrichtung der erfindungsgemäßen Vereinzelungseinrichtung nach einer der vorstehend beschriebenen Ausführungsformen ausgebildet ist. Hinsichtlich der Vorteile und Modifikationen der erfindungsgemäßen Vereinzelungseinrichtung wird somit zunächst auf die Vorteile und Modifikationen der erfindungsgemäßen Aufnahmevorrichtung verwiesen.

Die Greifeinrichtung ist vorzugsweise dazu eingerichtet, einzelne jeweils an dem zumindest einen Sperrkörper der Aufnahmevorrichtung anliegende elektrische Leiter aus der Aufnahmevorrichtung zu entnehmen. Hierzu weist die Greifeinrichtung vorzugsweise eine sensorische Detektionseinrichtung auf, mittels welcher die Position des zu greifenden und an dem zumindest einen Sperrkörper der Aufnahmevorrichtung anliegenden elektrischen Leiters ermittelbar ist. Die Detektionseinrichtung kann beispielsweise einen Lasersensor umfassen. Vorzugsweise ermittelt die Detektionseinrichtung den Abstand zu dem zu greifenden elektrischen Leiter mittels einer Abstandserfassung, wobei die Abstandserfassung auf Grundlage einer Lasertriangulation erfolgen kann.

Die Greifeinrichtung weist vorzugsweise bewegbare Greiferbacken auf, mittels welchen der an dem zumindest einen Sperrkörper der Aufnahmevorrichtung anliegende elektrische Leiter gegriffen und aus dem Führungsspalt herausgezogen werden kann. Zum Herausziehen des gegriffenen elektrischen Leiters aus dem Führungsspalt der Aufnahmevorrichtung ist die Greifeinrichtung mit einem antreibbaren Positioniersystem verbunden. Das Positioniersystem ist vorzugsweise ein Mehrachsverfahrsystem. Mittels des Positioniersystems kann die Greifeinrichtung entlang einer ersten Achse bewegt werden, sodass beispielsweise unterschiedliche nebeneinander angeordnete Aufnahmevorrichtungen von der Greifeinrichtung angefahren werden können. Mittels des Positioniersystems kann die Greifeinrichtung ferner entlang einer zweiten Achse bewegt werden, sodass die Greifeinrichtung an den an dem zumindest einen Sperrkörper der Aufnahmevorrichtung anliegenden elektrischen Leiter herangefahren werden kann. Mittels des Positioniersystems kann die Greifeinrichtung ferner entlang einer dritten Achse bewegt werden, sodass die Greifeinrichtung in die zum Greifen des elektrischen Leiters erforderliche Höhe verfahren werden kann. Das Positioniersystem kann mehrere Antriebe zum Bewegen der Greifeinrichtung aufweisen. Die Antriebe können elektrische, pneumatische oder hydraulische Antriebe sein. Insbesondere umfasst das Positioniersystem einen oder mehrere Schrittmotoren. Die Schrittmotoren können mit Multiturn-Absolutwert-Encodern ausgestattet sein. Die Antriebe können ferner über eine Haltebremse verfügen.

In einer weiteren bevorzugten Ausführungsform der erfindungsgemäßen Vereinzelungseinrichtung ist die Aufnahmevorrichtung geneigt gegenüber einer Horizontalen ausgerichtet. Die Längsachse der Aufnahmevorrichtung oder der Aufnahmespalt der Aufnahmevorrichtung weist gegenüber einer Horizontalen vorzugsweise einen Einbauwinkel auf. Aufgrund der geneigten Ausrichtung der Aufnahmevorrichtung gleiten und/oder rutschen die sich in dem Führungsspalt befindenden elektrischen Leiter unter Schwerkrafteinwirkung stets in Richtung des Entnahmeabschnitts nach, wenn ein elektrischer Leiter aus dem Führungsspalt entnommen wurde, sodass kein zusätzlicher Nachführantrieb für die elektrischen Leiter erforderlich ist. Auf diese Weise werden die Herstellungskosten nicht unnötig gesteigert und die Haltbarkeit der Aufnahmevorrichtung ist verbessert. Der Einbauwinkel kann dabei beispielsweise zwischen 10 und 45 Grad liegen. Die Greifeinrichtung kann eine Schwenkeinheit umfassen, mittels welcher die Neigung der bewegbaren Greiferbacken einstellbar ist. Die Schwenkeinheit kann elektrisch, pneumatisch oder hydraulisch angetrieben sein. Ferner weist die Schwenkeinheit vorzugsweise eine Anschlagsvorrichtung zum Einstellen der Ausrichtung der Greiferbacken auf. Die Anschlagsvorrichtung weist einen Anschlag für die Einstellung einer geneigten Ausrichtung der Greiferbacken und einen Anschlag für die Einstellung einer Horizontalausrichtung der Greiferbacken auf. Die Anschlagsvorrichtung kann Stoßdämpfer aufweisen, sodass die Stoßbeanspruchung beim Anschlagen reduziert wird.

In einer bevorzugten Ausführungsform weist die erfindungsgemäße Vereinzelungseinrichtung eine Übergabestation auf, welche dazu eingerichtet ist, Eigenschaften eines der Übergabestation zugeführten elektrischen Leiters zu erfassen, wobei die Greifeinrichtung vorzugsweise dazu eingerichtet ist, einen aus der Aufnahmevorrichtung entnommenen elektrischen Leiter der Übergabestation zuzuführen. Das Erfassen der Eigenschaften des elektrischen Leiters erfolgt vorzugsweise durch eine Bilderfassung und eine anschließende Bildauswertung. Die Übergabestation kann zum Erfassen der Eigenschaften des elektrischen Leiters eine oder mehrere Kameras aufweisen. Vorzugsweise erfolgt das Erfassen der Eigenschaften des elektrischen Leiters durch digitale Bildverarbeitung. Die Bildverarbeitung kann eine OCR-Auswertung umfassen. Die OCR-Auswertung kann die folgenden Prozessschritte umfassen: Bildaufnahme, Vorverarbeitung, Segmentierung, Klassifizierung und Nachverarbeitung (Auswertung). Die Übergabestation ist vorzugsweise dazu eingerichtet, elektrische Leiter an einen Verdrahtungsroboter zu übergeben. Die Übergabestation ist vorzugsweise dazu eingerichtet, auf den elektrischen Leitern aufgebrachte Identifikationsnummern zu erfassen. Die Übergabestation kann die erfassten Identifikationsnummern dann an eine Steuerung des Verdrahtungsroboters übermitteln. Der Verdrahtungsroboter ist vorzugsweise dazu eingerichtet, einen Verdrahtungsvorgang auf Grundlage der übermittelten Identifikationsnummer auszuführen. Beispielsweise wird der Verdrahtungsroboter zum Ausführen einer Schaltschrankverdrahtung eingesetzt.

In einer weiteren bevorzugten Ausführungsform weist die erfindungsgemäße Vereinzelungseinrichtung eine Fördereinrichtung zum Fördern des elektrischen Leiters auf. Die Fördereinrichtung kann zwei Rollen umfassen, zwischen welchen der elektrische Leiter einklemmbar ist. Durch eine Drehbewegung der Rollen kann der elektrische Leiter dann bewegt werden. Die Rollen können konkav geformte Umfangsflächen aufweisen, sodass ein zuverlässiger Kontakt zu dem elektrischen Leiter gewährleistet wird. Die konkav geformten Rollen gewährleisten, dass ein elektrischer Leiter beim Fördern immer bestrebt ist, sich im Zentrum der Rollen aufzuhalten. So wird verhindert, dass sich der elektrische Leiter beim Fördern zwischen den Rollen herausbewegt und der Kontakt zwischen den Rollen und dem elektrischen Leiter abbricht. Die Fördereinrichtung oder die Rollen der Fördereinrichtung können außerdem um eine Hochachse drehbar sein, sodass ein durch die Fördereinrichtung geförderter elektrischer Leiter während des Fördervorgangs eine Drehbewegung um seine Längsachse ausführt. Der elektrische Leiter führt somit während des Fördervorgangs eine Spiralbewegung aus, über welche die Formstabilität des elektrischen Leiters erhöht und ein Verhaken des elektrischen Leiters während des Fördervorgangs vermieden wird. Mittels der Fördereinrichtung kann der elektrische Leiter beispielsweise in eine transparente Röhre, beispielsweise eine Glasröhre, gefördert werden. Die transparente Röhre sorgt dafür, dass der elektrische Leiter beim Befördern zum Verdrahtungsroboter nicht umknickt und ermöglicht durch seine Transparenz eine Bildaufnahme für die optische Inspektion während des Förderns.

Die Vereinzelungseinrichtung weist vorzugsweise eine Beleuchtungseinheit auf, mittels welcher der elektrische Leiter während einer Bildaufnahme zur Erfassung von Eigenschaften des elektrischen Leiters beleuchtet wird. Die Beleuchtungseinheit kann obere Leuchtmittel und/oder untere Leuchtmittel aufweisen. Die Leuchtmittel können beispielsweise LEDs sein. Die oberen Leuchtmittel sind vorzugsweise nach unten ausgerichtet. Die unteren Leuchtmittel sind vorzugsweise nach oben ausgerichtet. Die Leuchtmittel erzeugen im Betrieb vorzugsweise einen Lichtvorhang. Auf diese Weise werden Reflexionseffekte effektiv vermieden. Ferner weist die Vereinzelungseinrichtung vorzugsweise einen Andockabschnitt für den Verdrahtungsroboter auf. An dem Andockabschnitt kann der Verdrahtungsroboter andocken und den elektrischen Leiter übernehmen.

Die erfindungsgemäße Vereinzelungseinrichtung wird ferner dadurch vorteilhaft weitergebildet, dass vor oder unterhalb der Fördereinrichtung oder im Nahbereich der Fördereinrichtung ein Führungskörper für die durch die Fördereinrichtung geförderten elektrischen Leiter angeordnet ist. Der Führungskörper kann mehrteilig sein. Der Führungskörper umfasst vorzugsweise einen oder mehrere Trichter zur Führung des elektrischen Leiters. Der eine oder die mehreren Trichter können eine seitliche Öffnung aufweisen. Über die seitliche Öffnung kann ein elektrischer Leiter in den oder die Trichter hineinbewegt werden. Vorzugsweise ist ein erster Trichter unbeweglich verbaut. Insbesondere ist ein zweiter Trichter derart verbaut, dieser relativ zu dem ersten Trichter verdrehbar ist. In einer Grundstellung der Trichter sind diese vorzugsweise derart ausgerichtet, das deren seitliche Öffnungen in Deckung gebracht sind, sodass ein Öffnungsspalt vorliegt, über welchen ein elektrischer Leiter in die Trichter eingeführt werden kann. Sobald der elektrische Leiter eingeführt ist, wird der zweite Trichter relativ zu dem ersten Trichter verdreht, beispielsweise um mindestens 90 Grad, sodass sich der Öffnungsspalt schließt. Nach der Drehung bzw. Rotation des zweiten Trichters liegt somit ein geschlossener Doppeltrichter vor und der elektrische Leiter kann mittels der Fördereinrichtung gefördert werden. Der elektrische Leiter wird durch den geschlossenen Doppeltrichter immer im Zentrum der Rollen der Fördereinrichtung gehalten. Der oder die Trichter sind vorzugsweise in Richtung der Fördereinrichtung, insbesondere in Richtung der Rollen der Fördereinrichtung, zulaufend ausgebildet, sodass sich der freie Durchmesser des Trichters bzw. der Trichter mit abnehmendem Abstand zu der Fördereinrichtung oder deren Rollen verringert. Über den oder die Trichter erfolgt eine Führung der elektrischen Leiter und eine Vorzentrierung der elektrischen Leiter in Richtung der Fördereinrichtung, sodass ein unbeabsichtigtes Herauslaufen der elektrischen Leiter aus der Fördereinrichtung während des Förderns vermieden wird. Die Mittelachse des Trichters bzw. der Trichter verläuft vorzugsweise fluchtend oder zumindest parallel zu einem durch die konkav geformten Rollen der Fördereinrichtung vorgegebenen Förderpfad zwischen den Rollen. Der Führungskörper kann beispielsweise aus Kunststoff oder Metall ausgebildet sein.

In einer weiteren bevorzugten Ausführungsform weist die erfindungsgemäße Vereinzelungseinrichtung eine Dreheinrichtung zum Drehen des elektrischen Leiters oder zum Drehen einer oder mehrerer Kameras auf. Die Dreheinrichtung umfasst vorzugsweise einen Drehteller, mittels welchem der elektrische Leiter um 360 Grad gedreht werden kann. Somit kann der elektrische Leiter in geeigneter Weise zu der einen oder den mehreren Kameras ausgerichtet werden, sodass beispielsweise eine Identifikationsnummer auf dem elektrischen Leiter durch die Kameras erfasst werden kann.

Die der Erfindung zugrundeliegende Aufgabe wird ferner durch ein Verfahren der eingangs genannten Art gelöst, wobei im Rahmen des Verfahrens vorkonfektionierte elektrische Leiter bereitgestellt werden, welche in einen Führungsspalt einer Aufnahmevorrichtung nach einer der vorstehend beschriebenen Ausführungsformen eingehangen sind. Das Verfahren umfasst das Entnehmen eines einzelnen elektrischen Leiters aus der Aufnahmevorrichtung mittels einer Greifeinrichtung, wobei der mittels der Greifeinrichtung aus dem Führungsspalt der Aufnahmevorrichtung zu entnehmende elektrische Leiter an dem zumindest einen beweglichen Sperrkörper des Sperrmechanismus der Aufnahmevorrichtung anliegt und wobei der elektrische Leiter mittels der Greifeinrichtung derart gegen den Sperrkörper bewegt wird, dass der elektrische Leiter eine Öffnungskraft auf den Sperrkörper aufbringt, durch welche der Sperrkörper von der Sperrposition in die Freigabeposition bewegt wird.

Das Verfahren wird vorzugsweise mittels einer Vereinzelungseinrichtung zum Vereinzeln von vorkonfektionierten elektrischen Leitern nach einer der vorstehend beschriebenen Ausführungsformen ausgeführt. Hinsichtlich der Vorteile und Modifikationen des erfindungsgemäßen Verfahrens wird somit zunächst auf die Vorteile und Modifikationen der erfindungsgemäßen Aufnahmevorrichtung und die Vorteile und Modifikationen der erfindungsgemäßen Vereinzelungseinrichtung verwiesen.

In einer bevorzugten Ausführungsform des erfindungsgemäßen Verfahrens wird der zu entnehmende elektrische Leiter mittels der Greifeinrichtung zur Entnahme aus dem Führungsspalt in eine Entnahmerichtung durch einen Entnahmeabschnitt des Führungsspalts hindurchbewegt. Die von dem elektrischen Leiter auf den Sperrkörper aufgebrachte Öffnungskraft zeigt dabei ebenfalls in die Entnahmerichtung.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Aufnahmevorrichtung in einer perspektivischen Darstellung;
- Fig. 2: die in der Fig. 1 abgebildete Aufnahmevorrichtung ohne Verbindungsplatte in einer Draufsicht;
- Fig. 3: die in der Fig. 1 abgebildete Aufnahmevorrichtung mit Verbindungsplatte in einer Draufsicht;
- Fig. 4: einen Abschnitt der in der Fig. 1 abgebildete Aufnahmevorrichtung in einer Frontansicht;
- Fig. 5: einen Abschnitt der in der Fig. 1 abgebildete Aufnahmevorrichtung mit in den Führungsspalt eingehangenen elektrischen Leitern in einer Frontansicht;
- Fig. 6: eine Schnittdarstellung durch den Sperrmechanismus der in der Fig. 1 abgebildeten Aufnahmevorrichtung;
- Fig. 7: einen Sperrmechanismus einer erfindungsgemäßen Aufnahmevorrichtung in einer schematischen Darstellung in einer Draufsicht;
- Fig. 8: einen Sperrmechanismus einer erfindungsgemäßen Aufnahmevorrichtung in einer schematischen Darstellung in einer Seitenansicht;
- Fig. 9: ein Ausführungsbeispiel der erfindungsgemäßen Vereinzelungseinrichtung in einer perspektivischen Darstellung;
- Fig. 10: eine Greifeinrichtung einer erfindungsgemäßen Vereinzelungseinrichtung in einer perspektivischen Darstellung;
- Fig. 11: die Greiferbacken der in der Fig. 10 abgebildeten Greifeinrichtung in einer perspektivischen Darstellung;
- Fig. 12: einen Vereinzelungsvorgang für vorkonfektionierte elektrische Leiter zu einem ersten Zeitpunkt;
- Fig. 13: den in der Fig. 12 dargestellten Vereinzelungsvorgang zu einem zweiten Zeitpunkt;
- Fig. 14: den in der Fig. 12 dargestellten Vereinzelungsvorgang zu einem dritten Zeitpunkt;
- Fig. 15: den in der Fig. 12 dargestellten Vereinzelungsvorgang zu einem vierten Zeitpunkt;
- Fig. 16: eine Übergabestation einer erfindungsgemäßen Vereinzelungseinrichtung in einer perspektivischen Darstellung;
- Fig. 17: eine transparente Röhre einer Detektionseinrichtung einer erfindungsgemäßen Vereinzelungseinrichtung in einer Seitenansicht;
- Fig. 18: eine Fördereinrichtung samt Führungskörper einer erfindungsgemäßen Vereinzelungseinrichtung in einer Schnittdarstellung; und
- Fig. 19: den in der Fig. 18 abgebildeten Führungskörper in einer perspektivischen Darstellung.

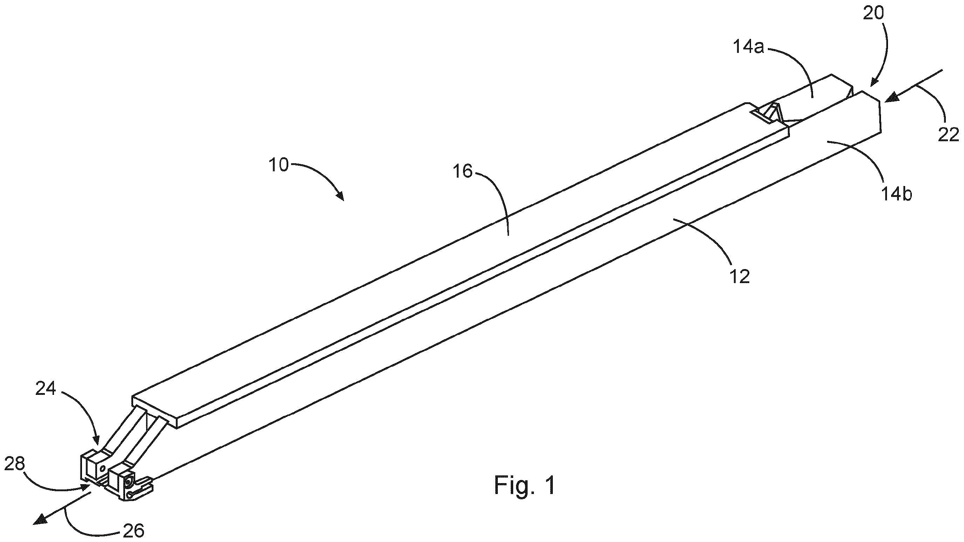

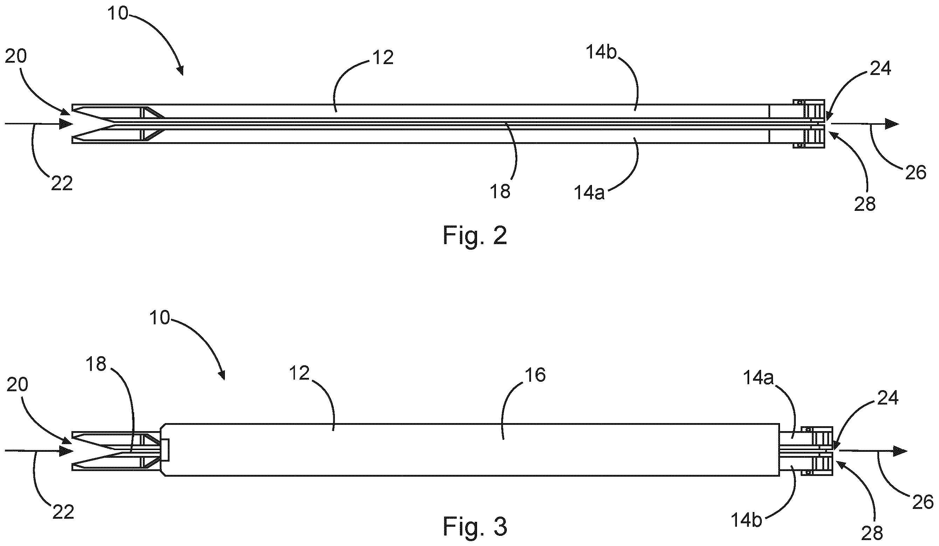

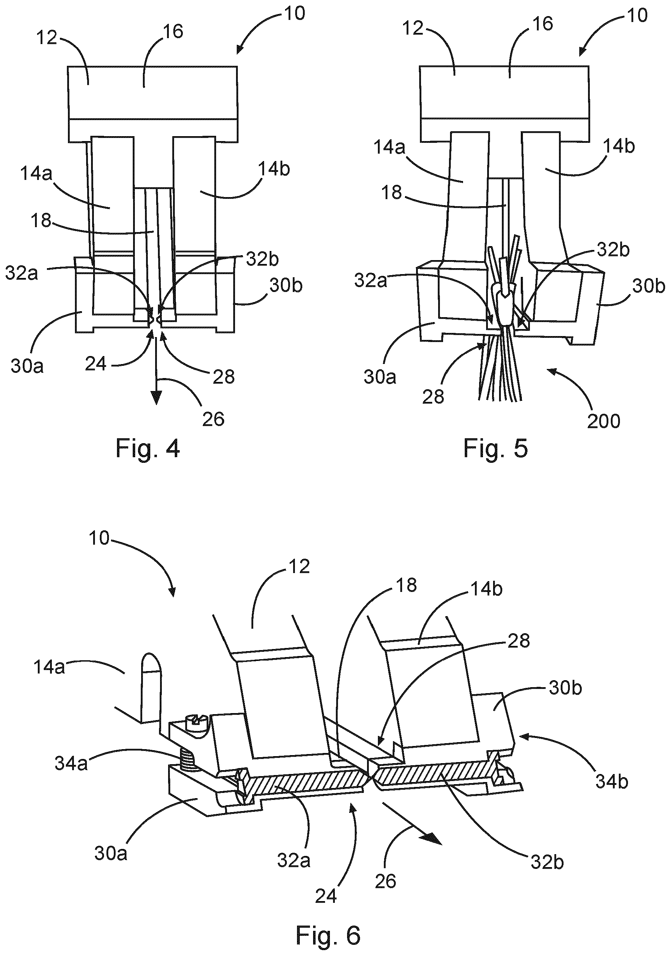

Die Fig. 1 bis 6 zeigen eine Aufnahmevorrichtung 10 für vorkonfektionierte elektrische Leiter 200, wie beispielsweise Kabel. Die Aufnahmevorrichtung 10 weist ein als längliche Aufnahmeschiene ausgebildetes Aufnahmeteil 12 auf. Das Aufnahmeteil 12 umfasst zwei längliche und beabstandet voneinander angeordnete Schienenteile 14a, 14b, welche mittels einer Verbindungsplatte 16 miteinander verbunden sind. Zwischen den Schienenteilen 14a, 14b befindet sich ein Führungsspalt 18 des Aufnahmeteils 12. In den Führungsspalt 18 ist eine Mehrzahl von vorkonfektionierten elektrischen Leitern 200 hintereinander einhängbar.

Das Aufnahmeteil 12 weist einen Einführabschnitt 20 auf, über welchen vorkonfektionierte elektrische Leiter 200 in den Führungsspalt 18 einführbar sind.

Zum Einführen von vorkonfektionierten elektrischen Leitern 200 in den Führungsspalt 18 sind diese entlang einer Einführrichtung 22 in den Einführabschnitt 20 des Aufnahmeteils 12 hindurchzubewegen. Die Einführrichtung 22 verläuft fluchtend zu dem Führungsspalt 18 zwischen den Schienenteilen 14a, 14b.

Das Aufnahmeteil 12 weist ferner einen Entnahmeabschnitt 24 auf, durch welchen in den Führungsspalt 18 eingehangene elektrische Leiter 200 zur Entnahme aus dem Führungsspalt 18 hindurchzubewegen sind. Zum Entnehmen von elektrischen Leitern 200 aus dem Führungsspalt 18 sind die elektrischen Leiter 200 entlang einer Entnahmerichtung 26 durch den Entnahmeabschnitt 24 hindurchzubewegen. Die Entnahmerichtung 26 verläuft fluchtend zum Führungsspalt 18. Der Einführabschnitt 20 und der Entnahmeabschnitt 24 sind an gegenüberliegenden Enden des Aufnahmeteils 12 angeordnet.

Die Aufnahmevorrichtung 10 weist ferner einen Sperrmechanismus 28 auf. Der Sperrmechanismus 28 erlaubt die Entnahme von einzelnen elektrischen Leitern 200 aus dem Führungsspalt 18 und setzt gleichzeitig eine Sicherung gegen unbeabsichtigtes Herausfallen der in den Führungsspalt 18 eingehangenen elektrischen Leiter 200 aus dem Aufnahmeteil 12 um. Der Sperrmechanismus 28 weist zwei bewegliche Sperrkörper 32a, 32b auf, wobei die Sperrkörper 32a, 32b als Sperrstifte ausgebildet sind.

Die Sperrkörper 32a, 32b sind in längliche Ausnehmungen in Seitenteilen 30a, 30b eingesetzt. Die Seitenteile 30a, 30b sind vorzugsweise aus Metall ausgebildet, beispielsweise aus Messing. Das Seitenteil 30a ist an dem Schienenteil 14a befestigt. Das Seitenteil 30b ist an dem Schienenteil 14b befestigt. Die Sperrkörper 32a, 32b sind jeweils zwischen einer Sperrposition und einer Freigabeposition bewegbar. Die Sperrkörper 32a, 32b sind dazu eingerichtet, in ihrer Sperrposition den Entnahmeabschnitt 24 gemeinsam zu versperren. Ferner sind die Sperrkörper 32a, 32b dazu eingerichtet, in ihrer Freigabeposition den Entnahmeabschnitt 24 gemeinsam freizugeben. Wenn sich die Sperrkörper 32a, 32b in der dargestellten Sperrposition befinden, können die elektrischen Leiter 200 nicht durch den Entnahmeabschnitt 24 des Führungsspalts 18 hindurchbewegt werden. Wenn sich die Sperrkörper 32a, 32b in der Freigabeposition befinden, kann ein elektrischer Leiter 200 durch den Entnahmeabschnitt 24 hindurchbewegt und aus dem Führungsspalt 28 entnommen werden.

Die Sperrkörper 32a, 32b können durch eine Beaufschlagung mit einer Öffnungskraft von ihrer Sperrposition in ihre Freigabeposition bewegt werden. Die Öffnungskraft kann von einem zu entnehmenden elektrischen Leiter 200, welcher an den Sperrkörpern 32a, 32b anliegt, auf die Sperrkörper 32a, 32b aufgebracht werden. Die Öffnungskraft kann beispielsweise durch ein Herausziehen des an den Sperrkörpern 32a, 32b anliegenden elektrischen Leiters 200 aus dem Führungsspalt 18 auf die Sperrkörper 32a, 32b aufgebracht werden. Der an den Sperrkörpern 32a, 32b anliegende elektrische Leiter 200 kann beispielsweise mit einem geeigneten Greifer entlang der Entnahmerichtung 26 aus dem Führungsspalt 18 herausgezogen werden.

Den Sperrkörpern 32a, 32b ist jeweils eine Rückstellfeder 34a, 34b zugeordnet. Die Rückstellfeder 34a ist dazu eingerichtet, den Sperrkörper 32a mit einer Schließkraft zu beaufschlagen. Die Rückstellfeder 34b ist dazu eingerichtet, den Sperrkörper 32b mit einer Schließkraft zu beaufschlagen. Zum Öffnen des Sperrmechanismus 28 ist eine Öffnungskraft auf die Sperrkörper 32a, 32b aufzubringen, welche höher als die von den Rückstellfedern 34a, 34b auf die Sperrkörper 32a, 32b aufgebrachte Schließkraft ist. Die Rückstellfedern 34a, 34b sind jeweils dazu eingerichtet, der von dem zu entnehmenden elektrischen Leiter 200 auf die Sperrkörper 32a, 32b aufgebrachten Öffnungskraft entgegenzuwirken. Sobald die Öffnungskraft die Schließkraft der Rückstellfedern 34a, 34b übersteigt, geben die Sperrkörper 32a, 32b den Führungsspalt 18 frei, sodass der vorderste elektrische Leiter 200 entnommen werden kann. Nach der Entnahme des elektrischen Leiters 200 veranlassen die Rückstellfedern 34a, 34b eine Bewegung der Sperrkörper 32a, 32b von der Freigabeposition zurück in die Sperrposition.

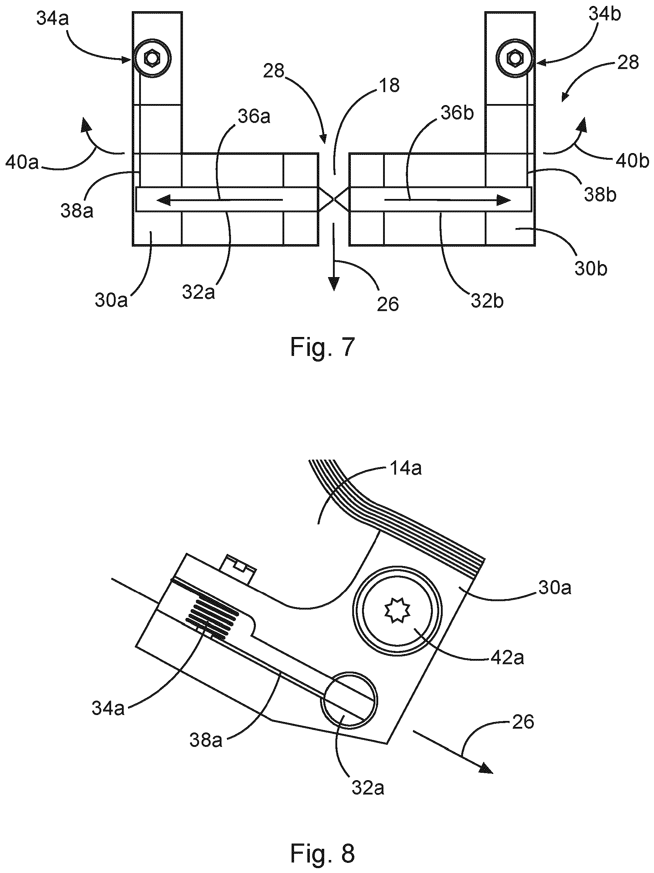

Die Fig. 7 zeigt, dass die Sperrkörper 32a, 32b entlang der Bewegungsrichtungen 36a, 36b nach außen bewegbar sind. Folglich führen die Sperrkörper 32a, 32b bei einer Bewegung von der dargestellten Sperrposition in die Freigabeposition sowie bei einer Bewegung von der Freigabeposition zurück in die Sperrposition eine Linearbewegung aus.

Die Rückstellfedern 34a, 34b sind als Schenkelfedern ausgebildet, wobei die Schließkraft über die Schenkel 38a, 38b auf die Sperrkörper 32a, 32b übertragen wird. Die Sperrkörper 32a, 32b weisen jeweils sich konisch verjüngende Endabschnitte auf, wobei sich die Endabschnitte gegenseitig berühren, wenn sich die Sperrkörper 32a, 32b in ihrer jeweiligen Sperrposition befinden. Die als Sperrstifte ausgebildeten Sperrkörper 32a, 32b weisen also abgerundete Spitzen auf. Wenn die Sperrkörper 32a, 32b durch den an den Sperrkörpern 32a, 32b anliegenden elektrischen Leiter 200 auseinander gedrückt werden, erfahren die Schenkel 38a, 38b der Rückstellfedern 34a, 34b eine Schenkelauslenkung 40a, 40b.

Die Fig. 8 zeigt, dass die Rückstellfedern 34a, 34b sich an dem jeweiligen Seitenteil 30a, 30b abstützen. Die Seitenteile 30a, 30b sind über Befestigungselemente 42a mit den Schienenteilen 14a, 14b verbunden.

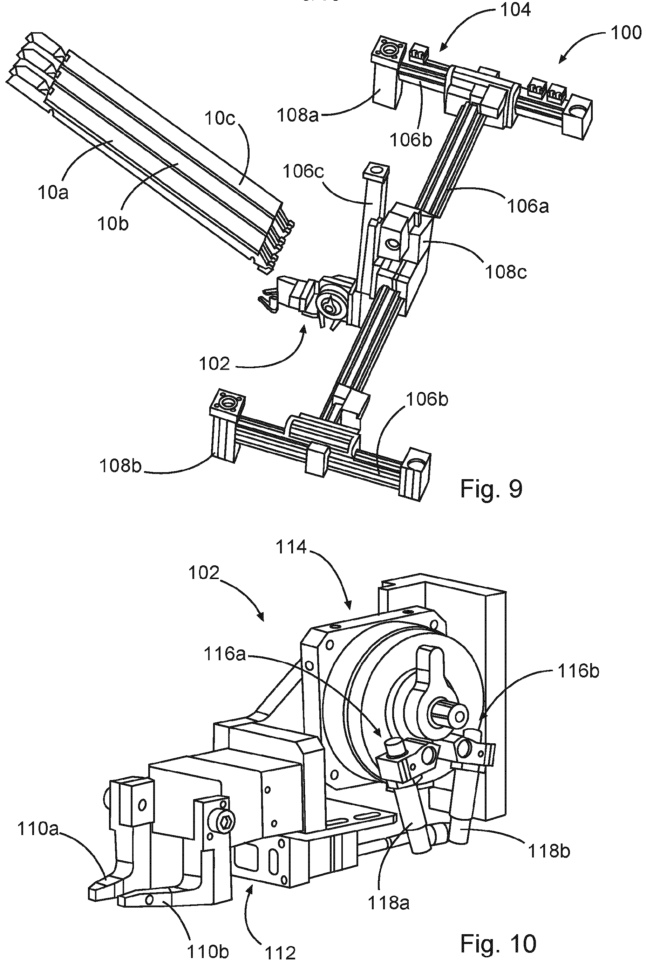

Die Fig. 9 zeigt eine Vereinzelungseinrichtung 100 mit drei Aufnahmevorrichtungen 10a-10c für vorkonfektionierte elektrische Leiter 200. Die Aufnahmevorrichtungen 10a-10c weisen jeweils einen Führungsspalt 18 auf, in welchen vorkonfektionierte elektrische Leiter 200 einhängbar sind. Die Spaltbreiten der Führungsspalte 18 der Aufnahmevorrichtungen 10a-10c unterscheiden sich voneinander, sodass in den Aufnahmevorrichtungen 10a-10c elektrische Leiter unterschiedlicher Stärke bzw. elektrische Leiter 200 mit unterschiedlichen Leiterquerschnitten eingehangen werden können.

Die Vereinzelungseinrichtung 100 weist ferner eine Greifeinrichtung 102 auf, mittels welcher elektrische Leiter 200 aus den Aufnahmevorrichtungen 10a-10c entnommen werden können.

Die Aufnahmevorrichtungen 10a-10c sind geneigt gegenüber einer Horizontalen verbaut und weisen somit einen Einbauwinkel gegenüber einer Horizontalen auf. Die Greifeinrichtung 102 weist eine Schwenkeinheit 114 auf, welche eine Anpassung der Neigung der Greifeinrichtung 102 an den Einbauwinkel der Aufnahmevorrichtung 10a-10c erlaubt.

Die Greifeinrichtung 102 ist mit einem als Mehrachsverfahrsystem ausgebildeten Positioniersystem 104 verbunden. Das Positioniersystem 104 erlaubt ein Verfahren der Greifeinrichtung 102 entlang der Positionierschiene 106a. Durch das Bewegen der Greifeinrichtung 102 entlang der Positionierschiene 106a können die nebeneinander angeordneten Aufnahmevorrichtungen 10a-10c von der Greifeinrichtung 102 angefahren werden. Die Positionierschiene 106a ist entlang der Positionierschienen 106b verfahrbar, sodass die Greifeinrichtung 102 an den zu entnehmenden elektrischen Leiter 200 herangefahren werden kann. Ferner ist die Greifeinrichtung 102 entlang der Positionierschiene 106c verfahrbar, sodass die Greifeinrichtung 102 hochgefahren und abgesenkt werden kann. Das Positioniersystem 104 ist mit mehreren Antrieben 108a-108c zum Bewegen der Greifeinrichtung 102 ausgestattet. Die Antriebe 108a-108c sind als Schrittmotoren mit Multiturn-Absolutwert-Encodern ausgebildet: Der Antrieb 108c weist eine Haltebremse auf.

Die Fig. 10 zeigt eine Greifeinrichtung 102 mit zwei bewegbaren Greiferbacken 110a, 110b, mittels welchen ein an den Sperrkörpern 32a, 32b einer Aufnahmeeinrichtung 10 anliegender elektrischer Leiter 200 gegriffen und aus dem Führungsspalt 18 der Aufnahmevorrichtung 10 gezogen werden kann.

Die Greifeinrichtung 102 weist ferner eine sensorische Detektionseinrichtung 112 auf, mittels welcher die Position des zu greifenden und an den Sperrkörpern 32a, 32b der Aufnahmevorrichtung 10 anliegenden elektrischen Leiters 200 ermittelbar ist. Hierzu weist die Detektionseinrichtung 112 vorzugsweise einen Lasersensor auf, mittels welchem der Abstand zu dem zu greifenden elektrischen Leiter 200 über Lasertriangulation ermittelbar ist.

Die Greifeinrichtung 102 weist außerdem eine pneumatische Schwenkeinheit 114, über welche die Neigung der Greiferbacken 110a, 110b einstellbar ist. Die über die Schwenkeinheit 114 realisierbaren Ausrichtungen des Greifers lassen sich über die Anschläge 116a, 116b festlegen. Die Anschläge 116a, 116b sind mit Stoßdämpfern 118a, 118b ausgestattet, um die Stoßbeanspruchung der Greiferkonstruktion bei der Neigungsverstellung zu reduzieren.

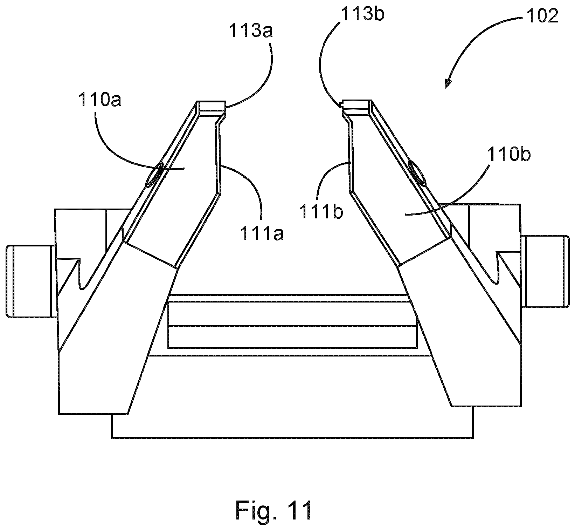

Die Fig. 11 zeigt, dass die Greiferbacken 110a, 110b der Greifeinrichtung 102 jeweils eine ebene bzw. plane Kontaktfläche 111a, 111b und einen frontseitigen Materialvorsprung 113a, 113b aufweisen. Beim Greifen eines elektrischen Leiters 200 wird dieser zwischen den Kontaktflächen 111a, 111b eingeklemmt, sodass die Kontaktflächen 111a, 111b mit dem gegriffenen elektrischen Leiter 200 in Kontakt stehen. Über die frontseitigen Materialvorsprünge 113a, 113b wird sichergestellt, dass lediglich ein einzelner elektrischer Leiter 200 bei einer Greifbewegung der Greiferbacken 110a, 110b gegriffen wird.

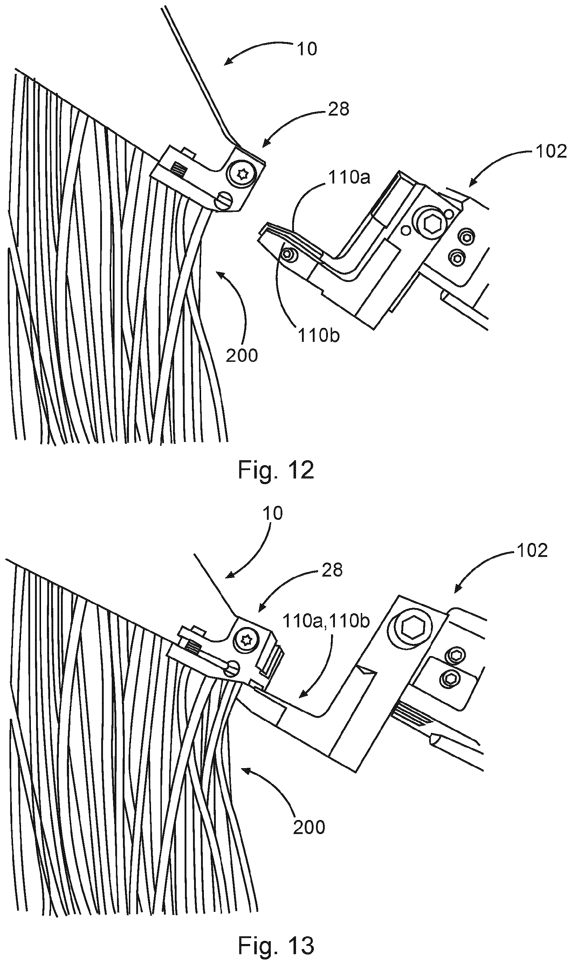

Die Fig. 12 bis 15 zeigen einen Vereinzelungsvorgang für einen elektrischen Leiter 200.

In der Fig. 12 wird die Greifeinrichtung 102 zunächst über ein Positioniersystem 104 an den zu entnehmenden elektrischen Leiter 200 herangefahren. Sobald sich die Greifeinrichtung 102 im Nahbereich des zu entnehmenden elektrischen Leiters 200 befindet, wird die exakte Position des zu entnehmenden elektrischen Leiters 200 mittels einer sensorischen Detektionseinrichtung 112 der Greifeinrichtung 102 ermittelt. Nach der Positionsermittlung können dann die Greiferbacken 110a, 110b der Greifeinrichtung 102, wie in Fig. 13 dargestellt, an den zu entnehmenden elektrischen Leiter 200 derart herangefahren werden, dass sich der zu entnehmende elektrische Leiter 200 an den Greiferbacken 110a, 110b befindet.

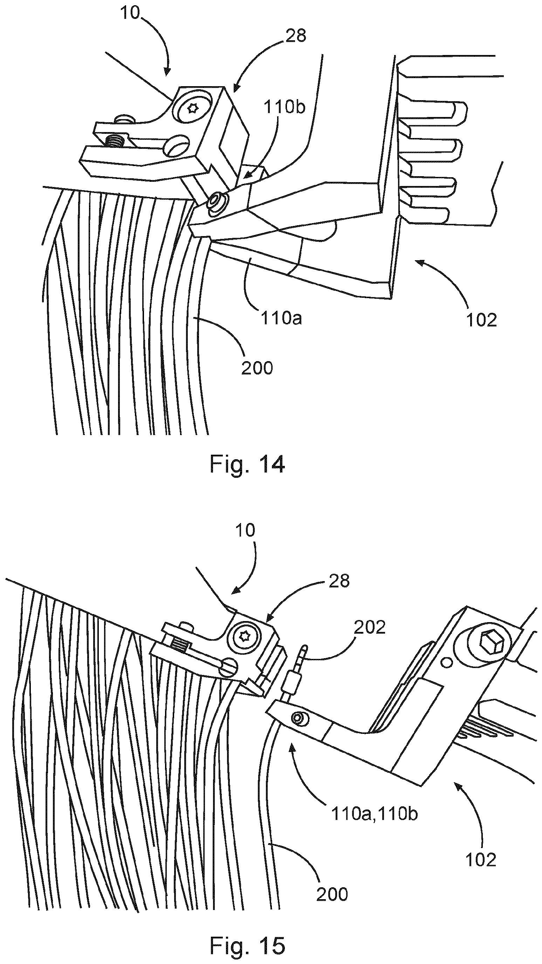

In der Fig. 14 ist dargestellt, wie der elektrische Leiter 200 zwischen den Greiferbacken 110a, 110b eingeklemmt wird, sodass der elektrische Leiter 200 aus dem Führungsspalt 18 der Aufnahmevorrichtung 10 herausgezogen werden kann. Durch das Herausziehen des elektrischen Leiters 200 mittels der Greifeinrichtung 102 wird durch den elektrischen Leiter 200 eine Öffnungskraft auf Sperrkörper 32a, 32b eines Sperrmechanismus 28 der Aufnahmevorrichtung 10 aufgebracht, welche dazu führt, dass der elektrische Leiter 200 von den Sperrkörpern 32a, 32b freigegeben wird und aus dem Führungsspalt 18 der Aufnahmevorrichtung 10 entnommen werden kann.

Die Fig. 15 zeigt den zwischen den Greiferbacken 110a, 110b festgeklemmten elektrischen Leiter 200. Dargestellt ist auch, dass der elektrische Leiter 200 ein als Aderendhülse ausgebildetes Kontaktierelement 202 aufweist, über welches der elektrische Leiter zuvor in dem Führungsspalt 18 der Aufnahmevorrichtung 10 eingehangen war.

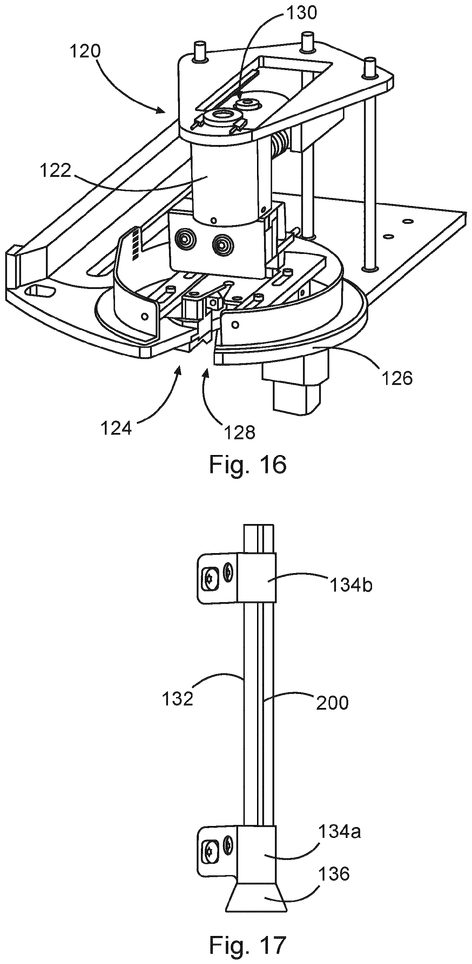

Die Fig. 16 zeigt eine Übergabestation 120 einer Vereinzelungseinrichtung 100. Die Übergabestation ist dazu eingerichtet, Eigenschaften eines der Übergabestation 120 über die Zuführöffnung 124 zugeführten elektrischen Leiters 200 zu erfassen. Die Greifeinrichtung 102 der Vereinzelungseinrichtung 100 dient in diesem Fall dazu, einen aus der Aufnahmevorrichtung 10 entnommenen elektrischen Leiter 200 der Übergabestation 120 zuzuführen.

Die Übergabestation 120 umfasst ein Kameramodul 122. Das Kameramodul 122 umfasst eine Kamera und eine Beleuchtungseinheit. Mittels der Kamera können Bildaufnahmen des elektrischen Leiters 200 erzeugt werden, sodass Eigenschaften des elektrischen Leiters 200 mittels Bildauswertung erfasst werden können. Insbesondere können über die Kameraaufnahmen Identifikationsnummern erfasst werden, welche auf der Außenseite der elektrischen Leiter 200 aufgebracht sind. Die Identifikationsnummern können an eine Steuerung eines Verdrahtungsroboters übergeben werden, sodass der Verdrahtungsroboter auf Grundlage einer Identifikationsnummer eine korrekte Verlegung des elektrischen Leiters vornehmen kann.

Zum Ausrichten des elektrischen Leiters 200 innerhalb des Kameramoduls 122 weist die Übergabestation 120 eine Dreheinrichtung 126 zum Drehen des elektrischen Leiters 200 auf. Über eine Fördereinrichtung 128 kann der elektrische Leiter 200 durch die Übergabestation 120 gefördert werden. Die Fördereinrichtung 128 weist konkav geformte Rollen auf, zwischen welchen der elektrische Leiter 200 einklemmbar ist.

Ferner weist die Übergabestation 120 einen Andockabschnitt 130 für einen Verdrahtungsroboter auf. An dem Andockabschnitt 130 kann der Verdrahtungsroboter andocken, um den elektrischen Leiter 200 von der Übergabestation 120 zu übernehmen.

In dem Kameramodul 122 kann die in der Fig. 17 dargestellte transparente Röhre 132 angeordnet sein. Die transparente Röhre kann eine Glas- oder Plexiglasröhre sein. Die Röhre 132 wird von Halterungen 134a, 134b gehalten, wobei die Halterung 134a einen Trichter 136 zur vereinfachten Einführung eines elektrischen Leiters 200 in die Röhre 132 aufweist, Innerhalb der Röhre 132 wird eine Knickung des elektrischen Leiters 200 vermieden, sodass eine zur Auswertung geeignete Bildaufnahme von dem elektrischen Leiter über die Kamera des Kameramoduls 122 erzeugt werden kann.

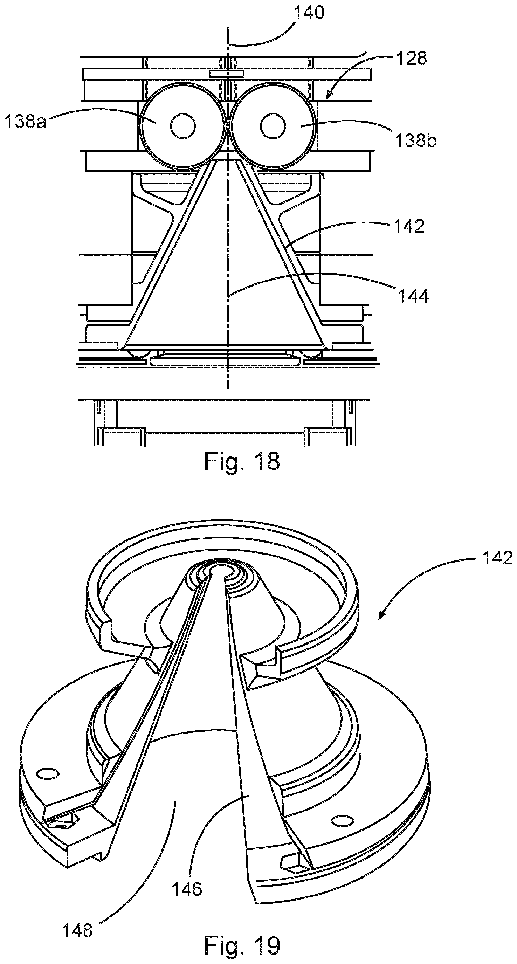

Die Fig. 18 zeigt eine Fördereinrichtung 128 zum Fördern eines elektrischen Leiters 200. Die Fördereinrichtung 128 weist zwei Rollen 138a, 138b auf, zwischen welchen der elektrische Leiter 200 einklemmbar ist. Durch eine Drehbewegung der Rollen 138a, 138b wird der elektrische Leiter 200 dann gefördert. Die Rollen 138a, 138b weisen konkav geformte Umfangsflächen auf, sodass der elektrische Leiter 200 beim Fördern im Zentrum der Rollen 138a, 138b gehalten wird. Die Rollen 138a, 138b sind gemeinsam um eine Hochachse rotierbar, sodass der elektrische Leiter 200 während des Fördervorgangs eine Drehbewegung um seine Längsachse ausführt. Der elektrische Leiter führt somit während des Fördervorgangs eine Spiralbewegung aus, über welche die Formstabilität des elektrischen Leiters 200 erhöht und ein Verhaken des elektrischen Leiters 200 während des Fördervorgangs vermieden wird. Unterhalb der Fördereinrichtung 128 ist ein Führungskörper 142 für die durch die Fördereinrichtung 128 geförderten elektrischen Leiter 200 angeordnet. Der Führungskörper 142 umfasst zwei Trichter, welche in Richtung der Rollen 138a, 138b der Fördereinrichtung 128 zulaufend ausgebildet sind. Über die Trichter erfolgt eine Führung der elektrischen Leiter 200 und eine Vorzentrierung der elektrischen Leiter 200 in Richtung der Fördereinrichtung 128. Die Mittelachse 144 der Trichter verläuft fluchtend zu einem durch die konkav geformten Rollen 138a, 138b der Fördereinrichtung 128 vorgegebenen Förderpfad 140 zwischen den Rollen 138a, 138b.

Die Fig. 19 zeigt, dass die Bewandung 146 der Trichter eine seitliche Öffnung 148 aufweisen, über welche die elektrischen Leiter 200 in die Trichter hineinbewegt werden können. Ein erster Trichter ist unbeweglich verbaut. Ein zweiter Trichter ist relativ zu dem ersten Trichter verdrehbar. In einer dargestellten Grundstellung der Trichter sind diese derart ausgerichtet, das deren seitliche Öffnungen 148 in Deckung gebracht sind, sodass ein Öffnungsspalt vorliegt, über welchen elektrische Leiter 200 in die Trichter eingeführt werden können. Sobald ein elektrischer Leiter 200 eingeführt ist, werden die Trichter relativ zueinander verdreht, sodass sich der Öffnungsspalt schließt und sich ein geschlossener Doppeltrichter ergibt, über welchen der aufgenommene elektrische Leiter 200 geführt wird.

### Bezugszeichen

- 10, 10a-10c: Aufnahmevorrichtung
- 12: Aufnahmeteil
- 14a, 14b: Schienenteile
- 16: Verbindungsplatte
- 18: Führungsspalt
- 20: Einführabschnitt
- 22: Einführrichtung
- 24: Entnahmeabschnitt
- 26: Entnahmerichtung
- 28: Sperrmechanismus
- 30a, 30b: Seitenteile
- 32a, 32b: Sperrkörper
- 34a, 34b: Rückstellfeder
- 36a, 36b: Bewegungsrichtungen
- 38a, 38b: Schenkel
- 40a, 40b: Schenkelauslenkung
- 42a: Befestigungselement
- 100: Vereinzelungseinrichtung
- 102: Greifeinrichtung
- 104: Positioniersystem
- 106a-106c: Positionierschienen
- 108a-108c: Antriebe
- 110a, 110b: Greiferbacken
- 111a, 111b: Kontaktflächen
- 112: Detektionseinrichtung
- 113a, 113b: Materialvorsprünge
- 114: Schwenkeinheit
- 116a, 116b: Anschläge
- 118a, 118b: Stoßdämpfer
- 120: Übergabestation
- 122: Kameramodul
- 124: Zuführöffnung
- 126: Dreheinrichtung
- 128: Fördereinrichtung
- 130: Andockabschnitt
- 132: Röhre
- 134a, 134b: Halterungen
- 136: Trichter
- 138a, 138b: Rollen
- 140: Förderpfad
- 142: Führungskörper
- 144: Mittelachse
- 146: Bewandung
- 148: Öffnung

- 200: elektrische Leiter
- 202: Kontaktierelement

## Patentansprüche

1. Aufnahmevorrichtung (10, 10a-10c) für vorkonfektionierte elektrische Leiter (200), mit
- einem Aufnahmeteil (12), welches einen Führungsspalt (18) aufweist, in welchen eine Mehrzahl von vorkonfektionierten elektrischen Leitern (200) hintereinander einhängbar ist, wobei der Führungsspalt (18) einen Entnahmeabschnitt (24) aufweist, durch welchen in den Führungsspalt (18) eingehangene elektrische Leiter (200) zur Entnahme aus dem Führungsspalt (18) hindurchzubewegen sind; und
- einem Sperrmechanismus (28) mit zumindest einem beweglichen Sperrkörper (32a, 32b), welcher dazu eingerichtet ist, zumindest einen Teil des Entnahmeabschnitts (24) in einer Sperrposition zu versperren und in einer Freigabeposition freizugeben;
wobei der Sperrkörper (32a, 32b) ein Blockierelement ist, mittels welchem der Entnahmeabschnitt (24) des Führungsspaltes (18) blockierbar ist, und wobei der Sperrkörper (32a, 32b) zur Entnahme eines in den Führungsspalt (18) eingehangenen elektrischen Leiters (200) aus dem Führungsspalt (18) durch eine von dem zu entnehmenden elektrischen Leiter (200) auf den Sperrkörper (32a, 32b) aufgebrachte Öffnungskraft von der Sperrposition in die Freigabeposition bewegbar ist;
**gekennzeichnet durch** zumindest eine Rückstellfeder (34a, 34b), welche dazu eingerichtet ist,
- den Sperrkörper (32a, 32b) mit einer Schließkraft zu beaufschlagen, und
- der von dem zu entnehmenden elektrischen Leiter (200) auf den Sperrkörper (32a, 32b) aufgebrachten Öffnungskraft entgegenzuwirken, und
- eine Bewegung des Sperrkörpers (32a, 32b) von der Freigabeposition in die Sperrposition zu veranlassen.

2. Aufnahmevorrichtung (10, 10a-10c) nach einem der vorstehenden Ansprüche,
**dadurch gekennzeichnet, dass** der Sperrkörper (32a, 32b) dazu eingerichtet ist, bei einer Bewegung zwischen der Sperrposition und der Freigabeposition eine Linearbewegung auszuführen.

3. Aufnahmevorrichtung (10, 10a-10c) nach Anspruch 1 oder 2,
**dadurch gekennzeichnet, dass** die Rückstellfeder (34a, 34b) als Schenkelfeder und/oder der Sperrkörper (32a, 32b) als Sperrstift ausgebildet ist.

4. Aufnahmevorrichtung (10, 10a-10c) nach einem der vorstehenden Ansprüche,
**dadurch gekennzeichnet, dass** der Sperrmechanismus (28) zwei bewegliche Sperrkörper (32a, 32b) aufweist, welche dazu eingerichtet sind, in ihrer Sperrposition den Entnahmeabschnitt (24) gemeinsam zu versperren und in ihrer Freigabeposition den Entnahmeabschnitt (24) gemeinsam freizugeben, wobei die Sperrkörper (32a, 32b) zur Entnahme eines in den Führungsspalt (18) eingehangenen elektrischen Leiters (200) aus dem Führungsspalt (18) durch eine von dem zu entnehmenden elektrischen Leiter (200) auf die Sperrkörper (32a, 32b) aufgebrachte Öffnungskraft von ihrer Sperrposition in ihre Freigabeposition bewegbar sind.

5. Aufnahmevorrichtung (10, 10a-10c) nach Anspruch 4,
**dadurch gekennzeichnet, dass** jedem Sperrkörper (32a, 32b) jeweils eine Rückstellfeder (34a, 34b) zugeordnet ist, welche dazu eingerichtet ist, den jeweiligen Sperrkörper (32a, 32b) mit einer Schließkraft zu beaufschlagen.

6. Aufnahmevorrichtung (10, 10a-10c) nach Anspruch 4 oder 5,
**dadurch gekennzeichnet, dass** die Sperrkörper (32a, 32b) dazu eingerichtet sind, bei einer Bewegung zwischen ihrer Sperrposition und ihrer Freigabeposition entgegengesetzte Bewegungen auszuführen.

7. Aufnahmevorrichtung (10, 10a-10c) nach einem der Ansprüche 4 bis 6,
**dadurch gekennzeichnet, dass** die Sperrkörper (32a, 32b) jeweils sich verjüngende, insbesondere sich konisch verjüngende, Endabschnitte aufweisen, wobei sich die Endabschnitte gegenseitig berühren, wenn sich die Sperrkörper (32a, 32b) in ihrer jeweiligen Sperrposition befinden.

8. Aufnahmevorrichtung (10, 10a-10c) nach einem der vorstehenden Ansprüche,
**dadurch gekennzeichnet, dass** das Aufnahmeteil (12) als längliche Aufnahmeschiene ausgebildet ist.

9. Vereinzelungseinrichtung (100) zum Vereinzeln von vorkonfektionierten elektrischen Leitern (200), mit
- einer Aufnahmevorrichtung (10, 10a-10c) für vorkonfektionierte elektrische Leiter (200); und
- einer Greifeinrichtung (102), welche dazu eingerichtet ist, elektrische Leiter (200) aus der Aufnahmevorrichtung (10, 10a-10c) zu entnehmen;
**dadurch gekennzeichnet, dass** die Aufnahmevorrichtung (10, 10a-10c) nach einem der vorstehenden Ansprüche ausgebildet ist.

10. Vereinzelungseinrichtung (100) nach Anspruch 9,
**gekennzeichnet durch** eine Übergabestation (120), welche dazu eingerichtet ist, Eigenschaften eines der Übergabestation (120) zugeführten elektrischen Leiters (200) zu erfassen, wobei die Greifeinrichtung (102) vorzugsweise dazu eingerichtet ist, einen aus der Aufnahmevorrichtung (10, 10a-10c) entnommenen elektrischen Leiter (200) der Übergabestation (120) zuzuführen.

11. Verfahren zum Vereinzeln von vorkonfektionierten elektrischen Leitern (200), mit den Schritten:
- Bereitstellen von vorkonfektionierten elektrischen Leitern (200), welche in einen Führungsspalt (18) einer Aufnahmevorrichtung (10, 10a-10c) nach einem der Ansprüche 1 bis 8 eingehangen sind; und
- Entnehmen eines einzelnen elektrischen Leiters (200) aus der Aufnahmevorrichtung (10, 10a-10c) mittels einer Greifeinrichtung (102), wobei der mittels der Greifeinrichtung (102) aus dem Führungsspalt (18) der Aufnahmevorrichtung (10, 10a-10c) zu entnehmende elektrische Leiter (200) an dem zumindest einen beweglichen Sperrkörper (32a, 32b) des Sperrmechanismus (28) der Aufnahmevorrichtung (10, 10a-10c) anliegt; wobei der elektrische Leiter (200) mittels der Greifeinrichtung (102) derart gegen den Sperrkörper (32a, 32b) bewegt wird, dass der elektrische Leiter (200) eine Öffnungskraft auf den Sperrkörper (32a, 32b) aufbringt, durch welche der Sperrkörper (32a, 32b) von der Sperrposition in die Freigabeposition bewegt wird.

12. Verfahren nach Anspruch 11,
**dadurch gekennzeichnet, dass** der zu entnehmende elektrische Leiter (200) mittels der Greifeinrichtung (102) zur Entnahme aus dem Führungsspalt (18) in eine Entnahmerichtung (26) durch einen Entnahmeabschnitt (24) des Führungsspalts (18) hindurchbewegt wird, wobei die von dem elektrischen Leiter (200) auf den Sperrkörper (32a, 32b) aufgebrachte Öffnungskraft in die Entnahmerichtung (26) zeigt.

## Claims

1. Receiving device (10, 10a-10c) for pre-assembled electrical conductors (200), with
- a receiving part (12), which has a guide gap (18), into which a plurality of pre-assembled electrical conductors (200) is suspendable one behind the other, wherein the guide gap (18) has a removal section (24), through which electrical conductors (200) suspended in the guide gap (18) can be moved through for removal from the guide gap (18); and
- a locking mechanism (28) with at least one movable locking body (32a, 32b), which is set up to lock at least a part of the removal section (24) in a locking position and to release in a release position;
wherein the locking body (32a, 32b) is a blocking element, by means of which the removal section (24) of the guide gap (18) is blockable, and wherein the locking body (32a, 32b) is movable from the locking position into the release position by an opening force applied to the locking body (32a, 32b) by an electrical conductor (200) to be removed from the guide gap (18) in order to remove the electrical conductor (200) suspended in the guide gap (18);
**characterized by** at least one return spring (34a, 34b), which is set up to
- apply a closing force to the locking body (32a, 32b), and
- counteract the opening force applied to the locking body (32a, 32b) by the electrical conductor (200) to be removed, and
- cause a movement of the locking body (32a, 32b) from the release position into the locking position.

2. Receiving device (10, 10a-10c) according to one of the preceding claims, **characterized in that** the locking body (32a, 32b) is set up to perform a linear movement during a movement between the locking position and the release position.

3. Receiving device (10, 10a-10c) according to claim 1 or 2,
**characterized in that** the return spring (34a, 34b) is designed as a leg spring and/or the locking body (32a, 32b) is designed as a locking pin.

4. Receiving device (10, 10a-10c) according to one of the preceding claims, **characterized in that** the locking mechanism (28) has two movable locking bodies (32a, 32b), which are set up to jointly lock the removal section (24) in their locking position and jointly release the removal section (24) in their release position, wherein the locking bodies (32a, 32b) are movable from their locking position into their release position by an opening force applied to the locking bodies (32a, 32b) by the electrical conductor (200) to be removed from the guide gap (18) in order to remove the electrical conductor (200) suspended in the guide gap (18).

5. Receiving device (10, 10a-10c) according to claim 4,
**characterized in that** each locking body (32a, 32b) is assigned a respective return spring (34a, 34b), which is set up to apply a closing force to the respective locking body (32a, 32b).

6. Receiving device (10, 10a-10c) according to claim 4 or 5,
**characterized in that** the locking bodies (32a, 32b) are set up to perform opposite movements during a movement between their locking position and their release position.

7. Receiving device (10, 10a-10c) according to any of claims 4 to 6,
**characterized in that** the locking bodies (32a, 32b) each have tapering, in particular conically tapering, end sections, wherein the end sections touch one another when the locking bodies (32a, 32b) are in their respective locking position.

8. Receiving device (10, 10a-10c) according to one of the proceeding claims, **characterized in that** the receiving part (12) is designed as an elongated receiving rail.

9. Separating device (100) for separating of pre-assembled electrical conductors (200), with
- a receiving device (10, 10a-10c) for pre-assembled electrical conductors (200); and
- a gripping device (102), which is set up to remove electrical conductors (200) from the receiving device (10, 10a-10c);
**characterized in that** the receiving device (10, 10a-10c) is designed according to one of the preceding claims.

10. Separating device (100) according to claim 9,
**characterized by** a transfer station (120), which is set up to capture properties of an electrical conductor (200) supplied to the transfer station (120), wherein the gripping device (102) is preferably set up to supply an electrical conductor (200) removed from the receiving device (10, 10a-10c) to the transfer station (120).

11. Process for separating pre-assembled electrical conductors (200), with the steps:
- providing pre-assembled electrical conductors (200), which are suspended in a guide gap (18) of a receiving device (10, 10a-10c) according to one of the claims 1 to 8; and
- removing an individual electrical conductor (200) from the receiving device (10, 10a-10c) by means of a gripping device (102), wherein the electrical conductor (200) to be removed from the guide gap (18) of the receiving device (10, 10a-10c) by means of the gripping device (102) rests against the at least one movable locking body (32a, 32b) of the locking mechanism (28) of the receiving device (10, 10a-10c); wherein the electrical conductor (200) is moved against the locking body (32a, 32b) by means of the gripping device (102) in such a way that the electrical conductor (200) applies an opening force to the locking body (32a, 32b), by means of which force the locking body (32a, 32b) is moved from the locking position into the release position.

12. Process according to claim 11,
**characterized in that** the electrical conductor (200) to be removed is moved by means of the gripping device (102) for removal from the guide gap (18) in a removal direction (26) through a removal section (24) of the guide gap (18), wherein the opening force applied by the electrical conductor (200) to the locking body (32a, 32b) is pointing in the removal direction (26).

## Revendications

1. Dispositif de logement (10, 10a-10c) pour conducteurs électriques préfabriqués (200), avec
- un élément de logement (12) qui présente une fente de guidage (18) dans laquelle une pluralité de conducteurs électriques préfabriqués (200) peuvent être accrochés les uns derrière les autres, la fente de guidage (18) présentant une section de prélèvement (24) à travers laquelle des conducteurs électriques (200) accrochés dans la fente de guidage (18) peuvent être déplacés pour être prélevés de la fente de guidage (18) ; et
- un mécanisme de blocage (28) avec au moins un corps de blocage mobile (32a, 32b), qui est destiné à bloquer au moins une partie de la section de prélèvement (24) dans une position de blocage, et à la libérer dans une position de libération ;
ledit corps de blocage (32a, 32b) étant un élément de blocage au moyen duquel la section de prélèvement (24) de la fente de guidage (18) peut être bloquée, et le corps de blocage (32a, 32b) pouvant être déplacé de la position de blocage dans la position de libération pour prélever de ladite fente de guidage (18) un conducteur électrique (200) accroché dans la fente de guidage (18), par une force d'ouverture appliquée par le conducteur électrique (200) à prélever sur le corps de blocage (32a, 32b) ;
**caractérisé par** au moins un ressort de rappel (34a, 34b) qui est destiné à
- appliquer au corps de blocage (32a, 32b) une force de fermeture, et
- s'opposer à la force d'ouverture appliquée par le conducteur électrique (200) à prélever du corps de blocage (32a, 32b), et
- provoquer un mouvement du corps de blocage (32a, 32b) de la position de libération dans la position de blocage.

2. Dispositif de logement (10, 10a-10c) selon l'une quelconque des revendications précédentes,
**caractérisé en ce que** le corps de blocage (32a, 32b) est destiné à exécuter un mouvement linéaire lors d'un mouvement entre la position de blocage et la position de libération.

3. Dispositif de logement (10, 10a-10c) selon la revendication 1 ou 2,
**caractérisé en ce que** le ressort de rappel (34a, 34b) est conçu sous forme de ressort spiralé et/ou le corps de blocage (32a, 32b) est conçu sous forme de goujon de consentement.

4. Dispositif de logement (10, 10a-10c) selon l'une quelconque des revendications précédentes,
**caractérisé en ce que** ledit mécanisme de blocage (28) présente deux corps de blocage mobiles (32a, 32b) destinés, dans leur position de blocage, à bloquer collectivement la section de prélèvement (24) et, dans leur position de libération, à libérer collectivement la section de prélèvement (24), les corps de blocage (32a, 32b) pouvant être déplacés de la position de blocage dans la position de libération pour prélever de ladite fente de guidage (18) un conducteur électrique (200) accroché dans la fente de guidage (18), par une force d'ouverture appliquée, par le conducteur électrique (200) à prélever, sur les corps de blocage (32a, 32b).

5. Dispositif de logement (10, 10a-10c) selon la revendication 4,
**caractérisé en ce qu'**à chaque corps de blocage (32a, 32b) est associé un ressort de rappel (34a, 34b) qui est destiné à appliquer une force de fermeture sur le corps de blocage (32a, 32b) correspondant.

6. Dispositif de logement (10, 10a-10c) selon la revendication 4 ou 5,
**caractérisé en ce que** les corps de blocage (32a, 32b) sont destinés à exécuter des mouvements opposés lors d'un mouvement entre leur position de blocage et leur position de libération.

7. Dispositif de logement (10, 10a-10c) selon l'une quelconque des revendications 4 à 6,
**caractérisé en ce que** les corps de blocage (32a, 32b) présentent chacun des sections d'extrémité qui vont en se rétrécissant, en particulier qui se rétrécissent de manière conique, les sections d'extrémité se touchant mutuellement lorsque les corps de blocage (32a, 32b) se trouvent dans leur position de blocage respective.

8. Dispositif de logement (10, 10a-10c) selon l'une quelconque des revendications précédentes,
**caractérisé en ce que** l'élément de logement (12) est conçu sous forme de rail de logement allongé.

9. Dispositif d'individualisation (100) pour séparer des conducteurs électriques préfabriqués (200), avec
- un dispositif de logement (10, 10a-10c) pour conducteurs électriques préfabriqués (200) ; et
- un dispositif de préhension (102) qui est destiné à prélever des conducteurs électriques (200) du dispositif de logement (10, 10a-10c) ;
**caractérisé en ce que** le dispositif de logement (10, 10a-10c) est conçu selon l'une quelconque des revendications précédentes.

10. Dispositif d'individualisation (100) selon la revendication 9,
**caractérisé par** un poste de transfert (120) qui est destiné à détecter des propriétés d'un conducteur électrique (200) amené au poste de transfert (120), le dispositif de préhension (102) étant de préférence destiné à amener au poste de transfert (120) un conducteur électrique (200) prélevé du dispositif de logement (10, 10a-10c).

11. Procédé pour individualiser des conducteurs électriques préfabriqués (200), avec les étapes :
- fourniture de conducteurs électriques préfabriqués (200) qui sont accrochés dans une fente de guidage (18) d'un dispositif de logement (10, 10a-10c) selon l'une quelconque des revendications 1 à 8 ; et
- prélèvement d'un conducteur électrique isolé (200) à partir du dispositif de logement (10, 10a-10c) au moyen d'un dispositif de préhension (102), le conducteur électrique (200) à prélever de la fente de guidage (18) du dispositif de logement (10, 10a-10c) au moyen du dispositif de préhension (102) étant au moins en appui contre ledit au moins un corps de blocage mobile (32a, 32b) du mécanisme de blocage (28) du dispositif de logement (10, 10a-10c) ; le conducteur électrique (200) étant déplacé contre le corps de blocage (32a, 32b) par le dispositif de préhension (102) de telle sorte que le conducteur électrique (200) applique une force d'ouverture sur le corps de blocage (32a, 32b), par laquelle le corps de blocage (32a, 32b) est déplacé de la position de blocage dans la position de libération.

12. Procédé selon la revendication 11,
**caractérisé en ce que** le conducteur électrique (200) à prélever est déplacé au moyen du dispositif de préhension (102) pour être prélevé de la fente de guidage (18) dans un sens de prélèvement (26) à travers une section de prélèvement (24) de la fente de guidage (18), la force d'ouverture appliquée par le conducteur électrique (200) sur le corps de blocage (32a, 32b) étant dirigée dans le sens de prélèvement (26).
